# EUROPEAN PATENT APPLICATION

(11) **EP 2 450 843 A1**
(43) Date of publication of application: **09.05.2012**
(21) Application number: 11185170.5
(22) Date of filing: 14.10.2011
(51) Int. Cl.: G06Q 30/02

(54) **Methods and systems for maintaining privacy of customer care metrics**

(30) Priority: 09.11.2010 US 942899
(71) Applicant: Sony Corporation, Tokyo 108-0075 (JP)
(72) Inventor: Cowie, Robert, San Diego, CA 92127 (US); Nguyen, Don, Temecula CA 92592-6890 (US); Lam, Tom, Chula Vista, CA 91915 (US); Zhang, Guoxuan, San Diego, CA 92130 (US)
(74) Representative: Jackson, Jonathan Andrew

(57) **Abstract**

Systems and methods consistent with the invention relate to providing customer care metrics. According to one exemplary embodiment, a computer-implemented method for generating customer care metrics associated with a terminal device is disclosed. The method receives a first set of customer care data including identity information of the terminal device. The method electronically integrates the first set of customer care data with a second set of customer care data collected from the terminal device, to produce a set of integrated data. The method also removes the identity information from the set of integrated data, and generates customer care metrics based on the integrated data.

## Description

The present invention relates to methods and systems for maintaining privacy of customer care metrics. Preferably, the invention relates to methods and systems for providing customer care metrics by combining information from a Personal Information (PI) source and a non-PI source and preserving non-PI status.

Customer care applications are widely used to collect customer care data related to maintenance, troubleshooting, and customer assistance on a terminal device, such as a terminal computer, a printer or a scanner, a cell phone, and a PDA. For example, Sony uses a computer program called VAIO Care^{™} on its VAIO^{™} series laptops. The computer program sends customer care metrics on a regular basis back to Sony for analysis. The metrics help understand the usage of the program and enhance the company's ability to analyze potential issues happening in the field. To protect customers' privacy, the customer care applications are typically designed to conceal the identity information of the terminal device, which is typically linked with personal information of the customer.

Although customer care applications can record all the in-field customer assistance activities, they are not able to track metrics related to customer support provided outside the field. For example, when VAIO Care^{™} fails to resolve a customer request in the field, the customer may make a support call to the customer service center in order to get additional help from a live technician. The support calls would be important data points to track in order to know whether the VAIO Care^{™} is meeting all the design goals and, if not, to find out where the program has failed and how the program may be improved. Conventionally, support calls are separately tracked with personal information of the terminal device or its user, such as using model/serial number of the terminal device, which releases the personal information of the user.

Accordingly, there exists a need for an improve method and system for providing customer care metrics with integrated customer call data while preserving privacy of the customer.

Systems and methods consistent with embodiments of the invention relate to providing customer care metrics. According to one exemplary embodiment, a computer-implemented method for generating customer care metrics associated with a terminal device is disclosed. The method receives, from a server, a first set of customer care data including identity information of the terminal device. The method integrates the first set of customer care data with a second set of customer care data collected from the terminal device, to produce a set of integrated data. The method also removes the identity information from the set of integrated data, and generates customer care metrics based on the integrated data.

According to another exemplary embodiment, a customer care metrics generator coupled to a terminal device is disclosed. The customer care metrics generator comprises a processor. The processor is configured to receive, from a server, a first set of customer care data including identity information of the terminal device. The processor is further configured to integrate the first set of customer care data with a second set of customer care data collected from the terminal device, to produce a set of integrated data. The processor is also configured to remove the identity information from the set of integrated data, and generate customer care metrics based on the integrated data. The customer care metrics generator further comprises a memory configured to store the customer care metrics.

According to yet another exemplary embodiment, a system for generating a customer care metrics report is disclosed. The system comprises a plurality of customer care metrics generators, each coupled to a terminal device. Each customer care metrics generators is configured to integrate a first set of customer care data received with identity information of the respective terminal devices with a second set of customer care data collected from the terminal device, to produce a set of integrated data. Each customer care metrics generator is further configured to remove the identity information from the set of integrated data, and generate customer care metrics based on the set of integrated data. The system further comprises a report generator coupled to the customer care metrics generators. The report generator is configured to generate a report analyzing the customer care metrics generated by the customer care metrics generators.

According to yet another exemplary embodiment, a non-transitory computer-readable storage device that stores a set of instructions which, when executed by a processor, performs a method for generating customer care metrics associated with a terminal device. The method receives, from a server, a first set of customer care data including identity information of the terminal device. The method integrates the first set of customer care data with a second set of customer care data collected from the terminal device, to produce a set of integrated data. The method also removes the identity information from the set of integrated data, and generates customer care metrics based on the integrated data.

It is to be understood that both the foregoing general description and the following detailed description are exemplary and explanatory only and are not restrictive of the invention, as claimed.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 illustrates a block diagram of an exemplary system for generating a customer care metrics report, consistent with the present invention;
Fig. 2 illustrates a block diagram of an exemplary customer care metrics generator, consistent with the invention;
Fig. 3 is an exemplary flow chart for generating customer care metrics with integrated customer call data, consistent with the present invention; and
Fig. 4 is an exemplary flow chart for generating customer care metrics with integrated warranty data, consistent with the present invention.

The following description refers to the accompanying drawings. Wherever possible, the same reference numbers will be used throughout the drawings to refer to the same or similar parts. While several exemplary embodiments and features of the invention are described herein, modifications, adaptations and other implementations are possible, without departing from the spirit and scope of the invention. For example, substitutions, additions or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

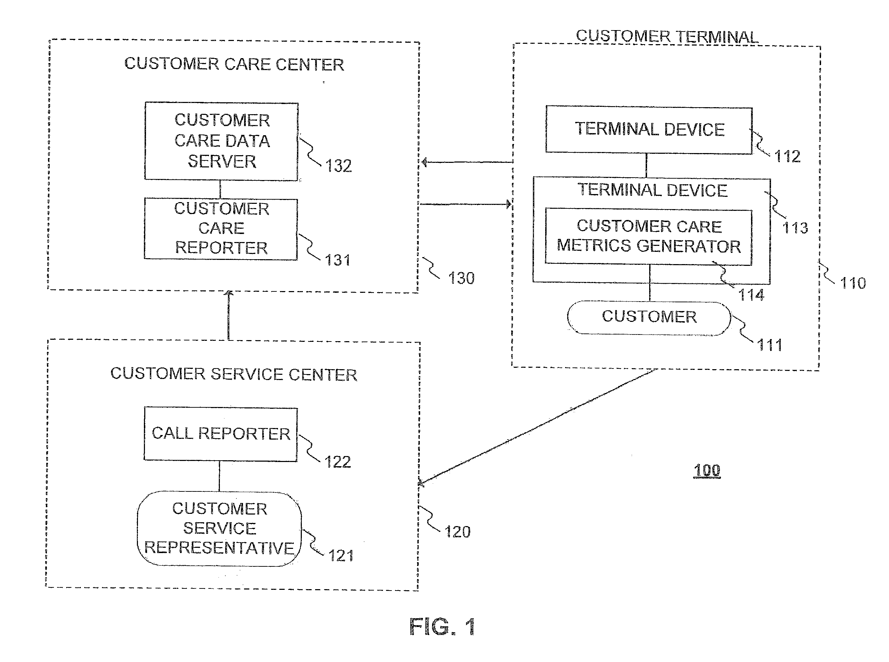

Fig. 1 illustrates a block diagram of an exemplary system 100 for generating a customer care metrics report. Consistent with some embodiments, system 100 may include one or more terminal devices 112 and 113, a customer care metrics reporter 114 located at a customer terminal 110, a call reporter 122 located at a customer service center 120, and a customer care reporter 131 and a customer care data server 132 located at a customer care center 130. It is contemplated that system 100 may include more or less components as shown in Fig. 1. Consistent with some embodiments, the various components of system 100 may be configured to communicate with each other via any suitable communication media, such as a wired cable or a wireless network.

In some embodiments, a terminal device may be any electronic device that is accessible by a customer 111. For example, terminal device 112 may be a terminal computer, such as a desktop or laptop, a photocopier, a scanner, a fax machine, a landline phone, a cell phone, or a PDA. In some embodiments, terminal device 113 may be a consumer electronic device that may plugged into or wirelessly connected to a terminal computer, such as terminal device 112. Examples of such a consumer electronic device may include, but not limited to, a DVD player, a game console, a walkman, an MP3 player, a cable or network TV, a digital camera, a camcorder, or a health diagnosis device. Customer terminal 110 may be an office, a conference room, a copier room, a private residence, a public access point, a hotel room, a hospital, etc., where terminal device 112 and/or terminal device 113 are located and where customer 111 may access terminal device 112. In some embodiments, terminal device 112 and/or terminal device 113 may be mobile and travel with the customer, and customer terminal 110 may change as terminal device 112 and/or terminal device 113 moves around.

Customer care metrics generator 114 may be coupled to terminal device 112. In some embodiments, customer care metrics generator 114 may be a part of the terminal device, and share one or more hardware components with terminal device 112. For example, terminal device 112 may be a laptop computer, and customer care metrics generator 114 may be installed on the laptop computer and use hardware components such as the processor, the memory, the hard drive, etc. of the laptop computer. In some other embodiments, customer care metrics generator 114 may be external to the terminal device. For instance, customer care metrics generator 114 may be installed on a laptop computer, and terminal device 113 may be a Bravia^{™} network TV or a Bravia^{™} player that is coupled to the laptop computer wirelessly or through a cable.

Customer care metrics generator 114 may be configured to diagnose and troubleshooting various malfunctions experienced by terminal device 112 and/or terminal device 113. For example, terminal device 112 and/or terminal device 113 may experience technical problems related to hardware components, such as, CPU, memory, mother board, hard drive, optical drive, video card, key board, mouse, and network adaptor. Terminal device 112 and/or terminal device 113 may also experience technical problems related to the operation system or any other software applications executed by terminal device 112 and/or terminal device 113, such as, Microsoft Office^{™}, Internet Explorer^{™}, Adobe Acrobat Reader^{™}, Windows Media Player^{™}, MATLAB^{™}, and other specialized software applications pertaining to the specific functions performed by terminal device 112.

In some embodiments, customer care metrics generator 114 may be configured to diagnose and troubleshooting the technical problems automatically upon their occurrences on terminal device 112 and/or terminal device 113. Alternatively, customer care metrics generator 114 may not start the diagnosis until requests from customer 111 are received. Customer care metrics generator 114 may be further configured to provide instant customer assistance to solve the technical problem. For example, customer care metrics generator 114 may close and restart the software application that is experiencing problems, or reboot terminal device 112 and/or terminal device 113 if the problem is persistent. Customer care metrics generator 114 may also display a diagnosis report to customer 111 indicating the type of problem that has occurred and instruct customer 111 to perform specific steps to solve the problem.

In addition to or in alternative to trouble shooting, customer care metrics generator 114 may also be configured to perform routine maintenance of software applications on terminal device 112 and/or terminal device 113, for example, at a predetermined frequency.

Consistent with embodiments of the present invention, customer care metrics generator 114 may be configured to record all the incidents where in-field customer assistances are provided. In some embodiments, customer care metrics generator 114 may keep an event log for these incidents. For example, each entry of the event log may correspond to a customer assistance incident. The entry may include time stamps indicating the time when the incident occurs and when it is solved. The entry may also include a description of the incident, e.g., the technical problem diagnosed, the solutions taken, and the end result.

In some embodiments, system 100 may further include a customer service center 120 for providing over-the-phone customer assistance. Sometimes, customer care metrics generator 114 may fail to solve the technical problem. For example, after restarting the software application, the same technical problem may appear. Alternatively, after customer care metrics report diagnoses and reports the problem to customer 111, customer 111 may decide not to follow the instructions given by customer care metrics generator 114. Customer 111 may call customer service center 120 to talk to a customer service representative 121 for additional assistance.

At the beginning of the call, customer 111 may be asked to identify the terminal device that he is calling about. For example, customer 111 may identify the model and/or serial number of terminal device 112 and/or terminal device 113 to customer service representative 121. Accordingly, customer service representative 121 may look up relevant information about terminal device 121, and advise solutions to problems described by customer 111.

Sometimes, a problem may occur during data transmission or otherwise communication between terminal device 112 and terminal device 113, and customer 111 may call and identify either or both of the devices. For example, if a problem occurs when streaming a video file from a laptop to a network TV, customer 111 may not know whether the problem is associated with the laptop or the TV. Consequently, customer 111 may call and identify either the laptop or the TV, or both.

In some embodiments, customer service representative 121 may enter log information about the customer service calls to a call reporter 122. Each entry of the call log may correspond to a support call received at the customer service center. For example, each entry may include a time stamp indicating when the support call is made, the model and/or serial number the support call is made about, and the reason of calling. In some cases, the reason of calling may include a brief description of the technical problem experienced on terminal device 112 and/or terminal device 113, diagnosis result provided by customer care metrics generator 114, actions already taken by customer 111, and suggestions provided by customer service representative 121.

In some embodiments, call reporter 122 may be configured to generate a call report including the customer call data associated with multiple terminal devices, including terminal device 112 and terminal device 113. For example, the call report may be generated periodically, e.g., every day, every week, biweekly, or every month, or upon request of customer service representative 121. Call reporter 122 may transmit the call report customer care center 130 and upload the call report to customer care data server 132 located therein.

Consistent with some embodiments, customer care metrics generator 114 may be configured to query customer care data server 132 to acquire customer call data specifically associated with terminal device 112 and/or terminal device 113. In some embodiments, customer care metrics generator 114 may identify itself with identity information of terminal device 112 and/or terminal device 113, e.g., its model and/or serial number. Accordingly, customer call data associated with the identity information may be downloaded from customer care data server 132 to customer care metrics generator 114.

Consistent with some embodiments, identity information of terminal device 112 and/or terminal device 113 may be obtained and recorded by customer care metrics generator 114 upon installation, registration, or connection. For example, customer care metrics generator 114 may acquire identity information of a terminal device 112 when it is installed on the terminal device 112. As another example, customer care metrics generator 114 may acquire identity information of terminal device 113, such as a TV or a player, when it is connected to and/or registered with a terminal device 112.

Consistent with some embodiments, customer care metrics generator 114 may submit identity information of both terminal device 112 on which customer care metrics generator 114 resides, and terminal device 113 externally connected to the terminal computer. In some embodiments, customer care metrics generator 114 may submit the identity information of any associated devices that are frequently used by the customer. Accordingly, customer call data associated with the both the terminal computer and the external device may be downloaded from customer care data server 132 to customer care metrics generator 114.

Consistent with some embodiments, customer care metrics generator 114 may further obtain, from customer care data server 132, other PI-related information in addition to or in alternative to customer call data. For example, warranty information associated with multiple terminal devices, including terminal device 112 and/or terminal device 113, may be stored on customer care data server 132. In some embodiments, the warranty information may be stored with the identity information of the respective terminal device.

Customer care metrics generator 114 may query customer care data server 132 to determine if any warranty data associated with identity information of terminal device 112 and/or terminal device 113 is available. Available warranty data may be downloaded to customer care metrics generator 114. For example, warranty data associated with both a terminal computer and one or more external devices may be downloaded. In some embodiments, the warranty information may be displayed to customer 111, for example, to remind customer 111 that the warranty is expiring.

In some embodiments, customer care metrics generator 114 may integrate the PI related data obtained from customer care data server 132, such as the customer call data and warranty data, with those non PI-related data collected locally on terminal device 112 and/or terminal device 113. In some embodiments, the different types of data may be integrated chronologically. After integration, customer care metrics generator 114 may be configured to remove any identity information, such as serial number of terminal device 112 and/or terminal device 113, from the integrated data. Alternatively, customer care metrics generator 114 may simply append the PI related data without the identity information from the non PI related data.

Customer care metrics report 114 may be further configured to generate customer care metrics based on the integrated data, and upload the customer care metrics to customer care data server 132. In some embodiments, system 100 may include multiple customer care metrics generators each coupled to a different terminal device. Each customer care metrics generator may assign a distinct reference ID to its customer care metrics. The distinct reference IDs are used to differentiate one terminal device from another but may be encoded so that they are not traceable to the identity of the respective terminal devices. Only the customer care metrics generator may contain information necessary to link the distinct reference ID to identity information of the respective terminal device.

System 100 may further include a customer care reporter 131 configured to generate a report using customer care metrics uploaded from the multiple customer care metrics generators. In the case that the customer care metrics are related to multiple devices, such as a terminal computer and one or more external devices connected thereto, individual reports may be generated for the respective devices. Alternatively, one integrated report may be generated to include customer care metrics of all the devices. The report may be used for studying the performance of customer care metrics generator 114, as well as any other components of system 100.

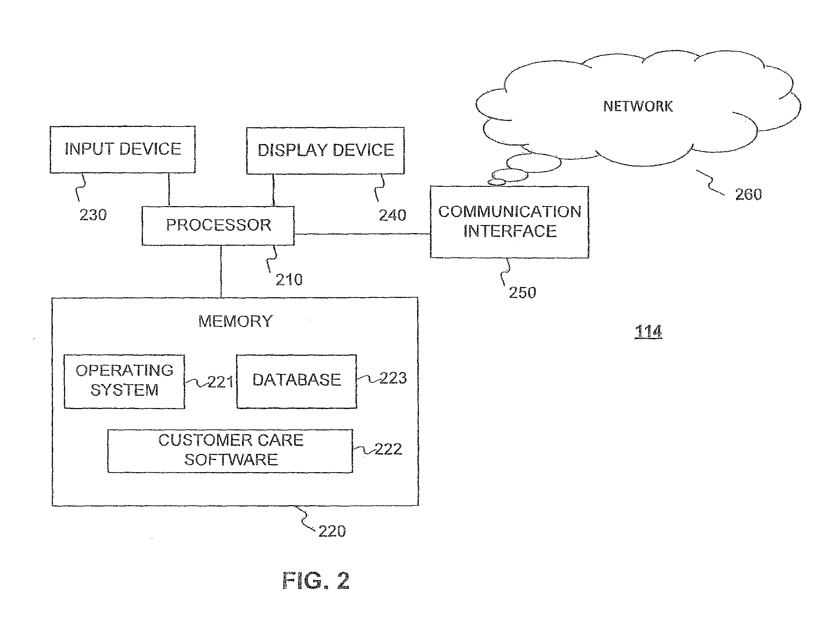

Fig. 2 illustrates a block diagram of an exemplary customer care metrics generator 114, consistent with an embodiment of the invention. It is contemplated that customer care metrics generator 114 may include more or fewer components than shown in Fig. 2. Consistent with some embodiments, other components of system 100, such as terminal devices 112 and 113, call reporter 122, customer care reporter 131, and customer care data server 132, may also include components and configurations similar to those shown in Fig. 2.

As shown in Fig. 2, customer care metrics generator 114 may include a processor 210, a memory module 220, a user input device 230, a display device 240, and a communication interface 250. Processor 210 can be a central processing unit ("CPU") or a graphic processing unit ("GPU"). Depending on the type of hardware being used, processor 210 can include one or more printed circuit boards, and/or a microprocessor chip. Processor 210 can execute sequences of computer program instructions to perform various methods that will be explained in greater detail below.

Memory module 220 can include, among other things, a random access memory ("RAM") and a read-only memory ("ROM"). The computer program instructions can be accessed and read from the ROM, or any other suitable memory location, and loaded into the RAM for execution by processor 220. For example, memory module 220 may store one or more software applications. Software applications stored in memory module 220 may comprise operating system 221 for common computer systems as well as for software-controlled devices. Further, memory module may store an entire software application or only a part of a software application that is executable by processor 210. For example, memory module may store customer care software 222 that may be executed by processor 210 and generate customer care metrics.

In some embodiments, memory module 220 may also store master data, user data, application data and/or program code. For example, memory module 220 may store a database 223 having therein various customer data, including, customer care data, customer call data, warranty data, etc.

In some embodiments, input device 230 and display device 240 may be coupled to processor 210 through appropriate interfacing circuitry. In some embodiments, input device 230 may be a hardware keyboard, a keypad, or a touch screen, through which customer 111 may input information to customer care metrics generator 114. Display device 240 may include one or more display screens that display texts or graphs to the user. For example, display device 240 may display the warranty information to customer 111.

Communication interface 250 may provide communication connections such that customer care metrics generator 114 may exchange information with external devices, such as terminal device 113, and customer care data server 132. For example, customer care metrics generator 114 may be wirelessly connected to a Bravia^{™} network TV or displayer through communication interface 250. Consistent with one embodiment, communication interface 250 may include a network interface (not shown) configured to transmit and receive information from a network 260.

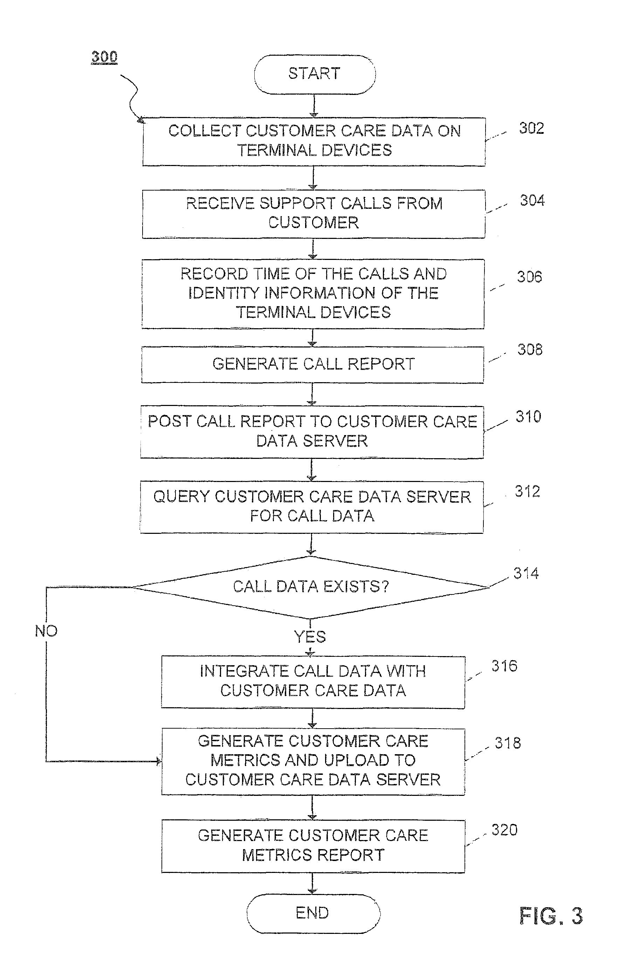

One or more components of system 100 may be used to implement a process related to customer care. For example, Fig. 3 is an exemplary flow chart for generating customer care metrics with integrated customer call data, consistent with the present invention. Process 300 may begin when customer care data are collected on one or more terminal devices (step 302). For example, customer care metrics generator 114 may be configured to record all the incidents where in-field customer assistance is provided on terminal device 112 and/or terminal device 113. In some embodiments, customer care metrics generator 114 may be configured to diagnose and troubleshoot hardware and/or software technical problems upon their occurrences on terminal device 112 and/or terminal device 113. In some other embodiments, customer care metrics generator 114 may perform routine maintenance of software applications on terminal device 112 and/or terminal device 113. The customer care incidents may be logged with time stamps indicating the time of the incidents and descriptions of the incidents.

Subsequent to or at the same time as step 302, support calls may be received at customer service center 120 (step 304). For example, customer 111 may call customer service center 120 to request for additional assistance from a customer service representative 121, when customer care metrics generator fails to solve the technical problems on terminal device 112 and/or terminal device 113.

The support calls may be logged by customer service representative 121 to create a set of customer call data on call reporter 122. In some embodiments, the time of a call and the identity information of the terminal device that the call is about may be recorded in the log (step 306). For example, a call regarding terminal device 112 and/or terminal device 113 may be recorded with its model and/or serial number. The identity information of terminal device 112 and/or terminal device 113 may be used to trace to personal information of customer 111, and thus the customer call data is PI-related. In some embodiments, the log entry may further include the reason of calling.

In some embodiments, the support call may be related to a previously logged support call made for the same incident. For example, customer 111 may call back customer service center 120 after trying out the suggestions made by customer service representative 121 to report that the problem persists. Customer service representative 121 may log this subsequent call by modifying the previous entry, or by making a separate entry linked to the same model/serial number of terminal device 112 and/or terminal device 113.

A call report may be generated based on the customer call data entered for various support calls associated with multiple terminal devices (step 308). In some embodiments, call reporter 122 may be configured to generate the call report periodically, or upon request of customer service representative 121. In some embodiments, the entries in the call report may be organized chronologically. Alternatively, the entries may also be organized according to serial numbers of the terminal devices.

The call report may be posted to customer care data server 132 (step 310). For example, the call report may be stored in a database on customer care data server 132. Customer care metrics generators may query customer care data server 132 to acquire customer call data specifically associated with the respective terminal devices they are coupled to (step 312). For example, customer care metrics generator 114 may inquire customer care data server 132 for customer call data associated with identity information of terminal device 112 it resides on and/or one or more external devices connected to the terminal computer, such as terminal device 113.

Customer care data server 132 may check the call reports and determine if any customer call data exists associated with the identity information of terminal device 112 and/or terminal device 113 (step 314). For example, customer care data server 132 may look up the model or serial number of terminal device 112 and/or terminal device 113 in the call reports to see if any support call was received regarding the terminal device.

If customer call data is found for the specific terminal device (step 314: yes), the customer call data may be downloaded from customer care data server 132. The customer call data obtained from customer care data server 132 may include the identity information of the terminal device, and thus is PI related. Customer care metrics generator 114 may integrate the customer call data with those non PI related customer care data collected locally on terminal device 112 and/or terminal device 113 (step 316).

For example, in step 316, customer care metrics generator 114 may integrate the log entries in the call report associated with support calls regarding terminal device 112 and/or terminal device 113 with the local log entries regarding the customer assistances provided on terminal device 112 and/or terminal device 113.

In some embodiments, the customer call data and local customer care data may be integrated chronologically according to their time stamps to help understand the customer needs. For example, a local entry may indicate that that a malfunction occurred with Internet Explorer^{™} at 12:00 pm on September 1, 2010, and the web browser was closed and restarted at 12:05 pm. The call report entry associated with the serial number of terminal device 112 may indicate that a support call was received at customer service center 120 at 12:10 pm claiming that web browser malfunction persisted after restarting the application. Customer care metrics generator 114 may align the local entry with the call report entry according to the time stamps and create integrated data to show the complete history of the incident. The integrated data suggests that customer care metrics generator 114 detected this particular problem but failed to solve it.

As another example, no local entry exists with a time stamp around 12:00 pm on September 1, 2010. However, the call report entry may indicate that a support call was received at customer service center 120 at 12:10 pm claiming that web browser malfunction occurred. By integrating the data, it may be concluded that customer care metrics generator 114 failed to detect this problem or failed to log it.

As yet another example, a local entry with a time stamp at 12:00 pm on September 1, 2010 indicate that a video streaming software operating on terminal device 112 failed while streaming a video file to terminal device 113, a network TV. The call report entry may indicate that a support call was received at customer service center 120 at 12:10 pm claiming that streaming failure associated with terminal device 113. By integrating the data, it may be concluded that customer care metrics generator 114 detected the streaming problem, but it failed to solve it.

In some embodiments, as part of step 316, identity information may be removed from the integrated data. The identity information is part of the customer call data obtained from customer care data server 132, and may release personal information of the customer. By removing the identity information, the privacy of the customer is preserved.

Customer care metrics may be generated based on the integrated data and updated to customer care data server 132 (step 318). In some embodiments, before uploading the customer care metrics to customer care data server 132, customer care metrics generator 114 may assign a distinct reference ID to its customer care metrics. The distinct reference ID does not include identity information of the terminal device but may be used to differentiate one terminal device from another. For example, a number "1" or a letter "A" may be associated with a first set of customer care metrics from a first terminal device, and a number "2" or a letter "B" may be associated with a second set of customer care metrics from a second terminal device. While the two sets of metrics are differentiated from each other by the IDs, the identity of the terminal devices are not released and privacy of the customers is protected.

If no customer call data is found for the specific terminal device (step 314: no), step 316 may be skipped and process 300 may proceed directly to step 318, where customer care metrics may be generated based on the local customer care data and updated to the server. A customer care metrics report may be generated based on the customer care metrics uploaded from multiple terminal devices (step 320). In some embodiments, customer care reporter 131 may analyze the customer care metrics sharing a same reference ID. In some embodiments, customer care reporter 131 may analyze a same type of customer care metric, associated with different reference IDs. Process 300 may terminate after step 320.

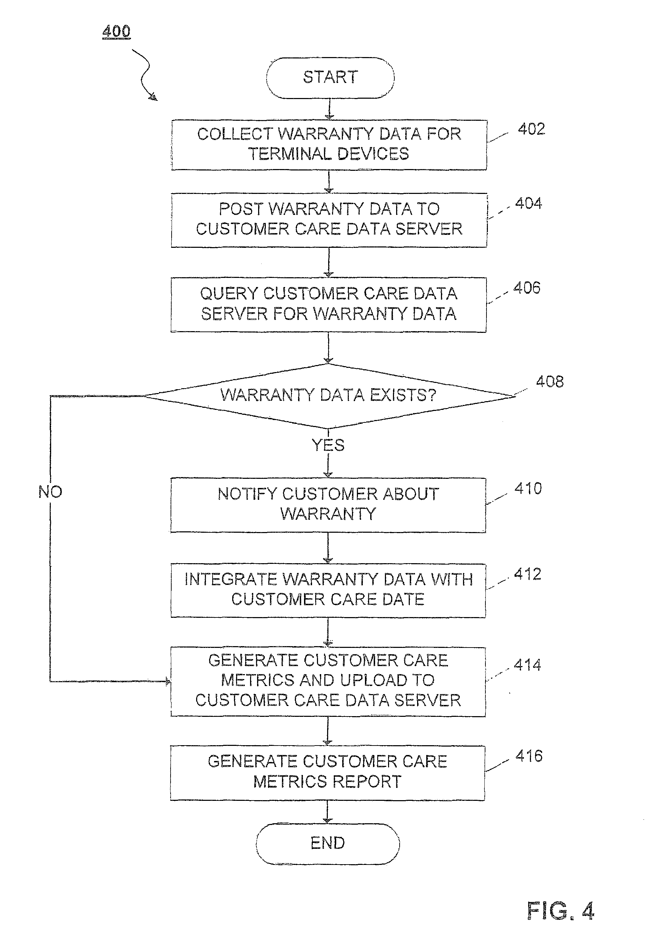

Fig. 4 is an exemplary flow chart for generating customer care metrics with integrated warranty data, consistent with the present invention. Process 400 may start when warranty data associated with one or more terminal devices are collected (step 402). For example, the warranty data may include the model or serial number of the terminal device, coverage of the warranty, warranty expiration date, and warranty extension information, etc. In some embodiments, warranty information may be collected from customer service department, distributors, or retail stores where the terminal devices are sold. In some other embodiments, warranty information may be collected from registration information submitted by the customers. For example, customers may register the terminal devices upon their first use.

The warranty data may be posted to customer care data server 132 (step 404). For example, the warranty data may be stored in the same database as where customer call data is stored, or a separate database. Customer care metrics generators may query customer care data server 132 to acquire warranty data specifically associated with the respective terminal devices they are coupled to (step 406). For example, customer care metrics generator 114 may inquire customer care data server 132 for warranty data associated with identity information of terminal device 112 and/or terminal device 113.

Customer care data server 132 may check the warranty database and determine if any warranty data exists associated with the identity information of terminal device 112 and/or terminal device 113 (step 408). For example, customer care data server 132 may check if any warranty data includes the model or serial number of terminal device 112 and/or terminal device 113.

If warranty data is found for the specific terminal device (step 408: yes), the warranty data may be downloaded from customer care data server 132. The warranty information may be provided to the customer (step 410). For example, customer 111 may be notified if warranty on terminal device 112 and/or terminal device 113 is expiring within a predetermined amount of time, such as a month. In some embodiments, customer 111 may be additionally provided with warranty extension information so that he may take action to extend the warranty before its expiration.

The warranty data may be integrated with existing customer care data on terminal device 112 and/or terminal device 113 (step 412). In some embodiments, the warranty data may be appended from the customer care data with the identity information of terminal device 112 and/or terminal device 113 removed. In step 414, customer care metrics may be generated based on the integrated data and updated to customer care data server 132, in a similar manner as described in step 318. A distinct reference ID may be assigned to the customer care metrics of each terminal device.

If no warranty data is found for the specific terminal device (step 408: no), steps 410 and 412 may be skipped and process 400 may proceed directly to step 414, where customer care metrics may be generated based on the local customer care data and updated to the server. In step 416, a customer care metrics report may be generated based on the customer care metrics uploaded from multiple terminal devices, in a similar manner as described in step 320. Process 400 may terminate after step 416.

For purposes of explanation only, certain aspects and embodiments are described herein with reference to the components illustrated in Figs. 1-4. The functionality of the illustrated components may overlap, however, and may be present in a fewer or greater number of elements and components. Further, all or part of the functionality of the illustrated elements may co-exist or be distributed among several geographically dispersed locations. Moreover, embodiments, features, aspects and principles of the present invention may be implemented in various environments and are not limited to the illustrated environments.

Further, the sequences of events described in Figs. 1-4 are exemplary and not intended to be limiting. Thus, other method steps may be used, and even with the methods depicted in Figs. 1-4, the particular order of events may vary without departing from the scope of the present invention. Moreover, certain steps may not be present and additional steps may be implemented in Figs. 1-4. Also, the processes described herein are not inherently related to any particular apparatus and may be implemented by any suitable combination of components.

Other embodiments of the invention will be apparent to those skilled in the art from consideration of the specification and practice of the invention disclosed herein. It is intended that the specification and examples be considered as exemplary only, with a true scope of the invention being indicated by the following claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A computer-implemented method for generating customer care metrics associated with a terminal device, comprising:
receiving a first set of customer care data including identity information of the terminal device;
integrating, by a processor, the first set of customer care data with a second set of customer care data collected from the terminal device, to produce a set of integrated data;
removing, by the processor, the identity information from the set of integrated data; and
generating, by the processor, customer care metrics based on the integrated data.

2. The method of claim 1, further comprising:
requesting the first set of customer care data by presenting the identity information of the terminal device.

3. The method of claim 1, wherein the first set of customer care data includes customer call data associated with a support call made by a customer regarding the terminal device.

4. The method of claim 3, wherein the customer call data includes a first set of time stamps identifying when the support call was made.

5. The method of claim 4, wherein the second set of customer care data includes a second set of time stamps identifying when in-field customer assistance was provided.

6. The method of claim 5, wherein integrating further comprises:
chronologically aligning the first set of time stamps with the second set of time stamps.

7. The method of claim 3, further comprising:
electronically generating a call report including customer call data associated with support calls regarding a plurality of terminal devices; and
storing the call report on a server.

8. The method of claim 1, wherein the first set of customer care data includes warranty data associated with the terminal device.

9. The method of claim 1, further comprising:
electronically assigning a reference ID to the customer care metrics associated with the terminal device, wherein the reference ID is not traceable to the identity information of the terminal device.

10. A customer care metrics generator coupled to a terminal device, comprising:
a processor configured to:
receive a first set of customer care data including identity information of the terminal device;
integrate the first set of customer care data with a second set of customer care data collected from the terminal device, to produce a set of integrated data;
remove the identity information from the set of integrated data; and
generate customer care metrics based on the integrated data; and
a memory configured to store the customer care metrics.

11. The customer care metrics generator of claim 10, wherein the processor is further configured to:
request the first set of customer care data by presenting the identity information of the terminal device.

12. The customer care metrics generator of claim 10,
wherein the first set of customer care data includes a first set of time stamps identifying when support call was made by a customer regarding the terminal device,
wherein the second set of customer care data includes a second set of time stamps identifying when an in-field customer assistance was provided, and
wherein the processor is further configured to chronologically align the first set of time stamps with the second set of time stamps.

13. The customer care metrics generator of claim 10, wherein the first set of customer care data includes warranty data associated with the terminal device, and wherein the processor is further configured to:
notify a customer if a warranty associated with the terminal device is expiring, based on the warranty data.

14. The customer care metrics generator of claim 10, wherein the processor is further configured to:
electronically assign a reference ID to the customer care metrics associated with the terminal device, wherein the reference ID is not traceable to the identity information of the terminal device.

15. A computer program product comprising computer readable instructions which, when loaded onto a computer, configure the computer the perform the method according to any one of claims 1 to 9.
